(19) Europäisches Patentamt
European Patent Office
Office européen des brevets

(11) Numéro de publication: **0 080 409**
**B1**

(12) **FASCICULE DE BREVET EUROPEEN**

(45) Date de publication du fascicule du brevet: **26.02.86**

(51) Int. Cl.⁴: **C 08 L 71/02**

(21) Numéro de dépôt: **82402100.0**

(22) Date de dépôt: **17.11.82**

(54) **Composition d'élastomère souple à base d'épichlorhydrine.**

(30) Priorité: **20.11.81 FR 8121784**

(43) Date de publication de la demande: **01.06.83 Bulletin 83/22**

(45) Mention de la délivrance du brevet: **26.02.86 Bulletin 86/9**

(84) Etats contractants désignés: **BE DE GB IT NL**

(56) Documents cités:
**DE - A - 1 904 348**
**FR - A - 1 350 169**
**FR - A - 2 193 054**

**K.F.HEINISCH: "Kautschuk-lexikon", 1977, A.W.Gentner Verlag, Stuttgart (DE);**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Bex, Guy, décédé (FR)**
Inventeur: **Carsoule, Yves, Résidence du Parc du Château Les Noyers "B", F-33700 Mérignac (FR)**

(74) Mandataire: **Mongrédien, André et al, c/o BREVATOME 25, rue de Ponthieu, F-75008 Paris (FR)**

**EP 0 080 409 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet une composition d'élastomère souple à base d'épichlorhydrine.

De façon plus precise, elle concerne des compositions d'élastomère à base d'homopolymère d'epichlorbydrine ou de copolymère d'épichlorhydrine et d'oxyde d' éthylène, présentant des propr iétés améliorées par rapport aux élastomères de ce type connus actuellement, en particulier en ce qui concerne leur resistance aux fluides hydrauliques sous pression, à des températures supérieures à 120°C.

On sait que les élastomèr es à base d'épichlorhydrine ont d'excellentes propriétés chimiques et physiques, en particulier une résistance aux fluides hydrauliques supérieure à celle des élastomères réputes comme étant resistants tels que les caoutchoucs nitriles, les caoutchoucs acryliques et les néoprènes, une résistance à l'ozone équivalant à celle du meilleur de ces trois élastomères et une excellente tenue à la chaleur.

Cependant, les compnsitions d'élastomères à base d'épichlorhydrine connues actuellement ne permettent pas d'obtenir des élastomeres présentant à des températures supérieures à 120°C, des proprietes élastiques et une résistance au déchirement satisfaisantes, notamment lorsqu' ils doivent être utilisés en présence d'huile.

Les compositions d'elastomeres connues actuellement comprennent généralement l'homopolymère ou un copolymère d'épichlorhydrine, une charge renforçante constituée par du noir de carbone, des accepteurs d'acide tels que le stearate de zinc et le minium, un agent de protection tel que le dibutyl dithiocarbamate de nickel et elles sont vulcanisées vers 150°C au moyen d'agents vulcanisants tels que les dérivés de la thiourée.

Ainsi, le brevet francais FR-A- 2 193 054 décrit des compositions de caoutchouc comprenant un homopolymère d'épichlorhydrine, une charge de noir de carbone, un accepteur d'acide constitué par du phosphite basique de plomb, un agent plastif iant constitué par un acide dicarboxylique tel que l'acide azélaïque, l'acice subérique et l'acide sébacique, trois agents de protection constitués respectivement par du dibutyldithiocarbamate de nickel, du diméthyldithiocarbamate de cuivre ou du diéthyldithiocarbamate de cadmium et de la phénothiazine, et elles sont vulcanisées au moyen d'éthylène thiourée. Ces compositions sont capables de résister aux températures et aux pressions élevées en conservant leur intégralité de structure et leurs propriétés physiques lors de l'exposition à du pétrole, à de l'eau et/ou à de la saumure, à des températures pouvant dépasser 120°C et à des pressions aussi élevées que 180 kg/cm$^2$.

De telles compositions présentent l'inconvenient d'être difficiles à manipuler car elles adhèrent au cylindre lors du laminage; de plus, elles corrodent les moules lors de la vulcanisation à la presse.

La présente invention a précisément pour objet une composition d' élastomère souple à base d' épichlorhydrine qui pallie les inconvénients précités, qui présente par ailleurs une bonne tenue sous rayonnements ionisants, et qui convient notamment pour la fabrication de sacs de moulages tenant à une pression de 2000 bars et à une température de 140°C en présence d'huile tout en restant souples.

A cet effet, la composition d' élastomère selon l'invention comprend:

- 100 parties en poids d'homopolymère ou de copolymere d'épichlorhydr ine,
- 0,5 à 20, de préference 1 à 10 parties en poids, d'un agent plastif iant,
- 1 à 150, de préference 1 à 50 parties en poids, d'une charge renforçante constituée par un noir de carbone de moyenne structure, peu aggloméré, ayant une dimension moyenne de particules de 200 à 28O micromètres, et un indice d'absoption d'iode NFT45-111 de 115 à 127 mg/g, un indice d'absorption de dibutyl phtalate NFT45-122 de 108 à 120 cm$^3$/100g et une masse volumique apparente NFT45-151 de 295 à 395 kg/m$^3$,
- 0,5 à 7,5, de préférence 1 à 4 parties en poids, d'un premier accepteur d'acide constitué par un sel métallique d'un acide carboxylique comportant au moins 8 atomes de carbone,
- 0,5 à 7,5 parties en poids d'un second accepteur d'acide constitué par un oxyde, un hydroxyde ou un sel métallique,
- 0,5 à 5,5 parties en poids d'au moins un agent de protection choisi dans le groupe des composés organiques à cycles aromatiques conjugués contenant des fonctions amine ou phénol et des sels métalliques de dithiocarbamate d'alkyle ou d'aryle, et
- 0,5 à 5,5, de préférence 0,5 à 3 parties en poids, d'un agent de vulcanisation.

Grâce à la présence dans cette composition d'un noir de carbone présentant les caractéristiques précitées, on améliore sa résistance au déchirement de l'élastomère et on améliore sa résistance au vieillissement en conservant la souplesse, par exemple une contrainte de traction à 300% d'allongement faible, meme après vieillissement à l'air ou dans différentes huiles aliphatiques à des températures de 140°C ou plus.

Les noirs de carbone susceptibles de convenir sont les noirs ISAF ® classes selon les normes ASTM D 2516 et AFNOR NFT 45 103 dans les séries N 200 à N 300. Ces noirs au four qui présentent une bonne résistance à l'abrasion et au déchirement et un indice de structure relativement élevé, possèdent les caracteristiques définies précédemment et peuvent être utilises dans la composition d' élastomère de l'invention.

De tels noirs présentent par rapport à l'emploi d'un noir du type HAF ® un écart avec l'IRBn°4 sur la contrainte à 300% d'allongement:

- de -0,52 à -0,72 MPa après 15 minutes de

vulcanisation, et

- de -0,63 à -0,83 MPa après 30 minutes de vulcanisation.

Selon l'invention, le copolymère d' épichlorhydr ine susceptible d'être utilisé est le copolymère d'épichlorhydrine et d'oxyde d'éthylene.

Selon une caractéristique avantageuse de la composition d'élastomère de l'invention. l'agent de vulcanisation est constitué soit par une polyamine aliphatique, alicyclique ou aromatique, soit par un carbamate de diamine.

En effet, bien qu'on puisse utiliser d'autres agents de vulcanisation, par exemple, des imidazolines ou des agents aminés contenant du soufre tels que l'éthylène thiourée (2-mercaptoimidazoline) et la 2,4,6-trimercapto-S-triazine, on a trouvé que de meilleurs résultats sont obtenus lorsqu'on utilise une polyamine ou un carbamate de diamine tel que le carbamate d'hexaméthylène diamine ou le carbamate d'éthylène diamine.

L'emploi de ces agents de vulcanisation permet en particulier d'améliorer la résistance au vieillissement à l'air des élastomères de l'invention; par ailleurs ces agents ne présentent pas la toxicité de certains produits utilisés antérieurement tels que les dérivés de la thiourée.

Selon une autre caractéristique avantageuse, la composition d'élastomère de l'invention comprend deux agents de protection constitués, d'une part, par un composé organique à cycles aromatiques conjugues contenant des fonctions amine ou phénol et, d'autre part, par un sel métallique de dithiocarbamate d'alkyle ou d'aryle.

Ceci permet en particulier de limiter à un degré inférieur la teneur en accepteur d'acide de la composition d' élastomère. Or, dans la plupart des cas, on utilise de l'oxyde de plomb $Pb_3O_4$ qui est toxique comme accepteur d'acide. Aussi, l'emploi de deux agents de protection est particulièrement intéressant pour limiter les problèmes de toxicité. Par ailleurs, ceci permet d'améliorer également la résistance au vieillissement des élastomères.

Le rôle de ces agents de protection est d' éviter l'action de l'oxygène, de l'ozone ou de la lumière, qui conduit dans la plupart des cas à une degradation de l'élastomère et à la formation de craquelures.

Généralement, on utilise dans ce but des sels métalliques de dithiocàrbamate d'alkyle, des composés aminés ou des dérivés phénoliques.

A titre de composés aminés susceptibles d'être utilisés, on peut citer la N-isopropyl N'-phényl p-phénylènediamine (IPPD), la N (diméthyl-1,3 butyl) N'phényl p-phénylènediamine, la bis (alpha, alpha-diméthylbenzyl) 4,4'-diphénylamine (DPPD), la diphénylamine octylée et la triméthyl-2,2,4 dihydro-1,2 quinoléine polymérisée.

A titre de dérivés phénoliques susceptibles d'être utilisés, on peut citer le méthylène bis-diméthyl-4,6 phénol le 2,2' bis méthyl-4 (méthyl-1 cyclohe-xyl)-6 phénol.

Selon l'invention, lorsque l'on utilise deux agents de protection, on utilise avantageusement comme premier agent de protection un sel métallique d'un dithiocarbamate d'alkyle ou d'aryle de formule:

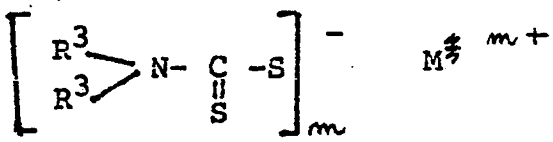

dans laquelle $H^3$ est un radical alkyle ou aryle, et M est un métal choisi dans le groupe comprenant le sodium, le potassium, le bismuth, le cadmium, le cuivre, le nickel, le plomb, le selénium, le tellure et le zinc, et m est la valeure du métal.

A titre d'exemple, le radical $R^3$ peut être un groupe méthyle, éthyle, propyle, butyle ou benzyle.

De préférence, ce premier agent de protection est le dibutyl dithiocarbamate de nickel (NBC).

Dans le cas où l'on utilise deux agents de protection, le second agent de protection est avantageusement choisi parmi les composés suivants:

- la N-isopropyl N'-phényl p-phénylènediamine (IPPD),
- bis, (alpha, alpha-diméthylbenzyl) 4,4'-diphénylamine (DPPD),
- le dihydroxy-2,2' di (méthyl-1 cyclohexyl)-3,3' diméthyl-5 5, diphénylméthane, sous forme de PERMANYX WSP®
- la triméthyl-2,2,6 dihydro-1,2 quinoléine polymerisée -sous forme de FLECTOL H ®.

La composition d'élastomère de l'invention comprend aussi un agent plastifiant.

A titre d'agents plastifiants susceptibles d'être utilisés, on peut citer les composés de formule:

$R^1 - (CH_2)_n - COOR^2$

dans laquelle $R^1$ est un groupe alkyle, $R^2$ est un groupe alkyle hydroxylé dérivé d'un polyalcool aliphatique ou un atome d'hydrogène, et n est un nombre entier supérieur à 7,

ou les composés de formule:

$R^2OOC- (CH_2)_n- COOR^2$

dans laquelle $R^2$ est un groupe alkyle hydroxylé dérivé d'un polyalcool aliphatique ou un atome d'hydrogène, et n est un nombre entier supérieur à 7.

Généralement, les radicaux $R^1$ et $R^2$ ont de 0 à 8 atomes de carbone. A titre d'exemple de radicaux $H^1$ susceptibles d'être utilisés, on peut citer les radicaux méthyle et éthyle,

A titre de radicaux $H^2$ susceptibles d'être utilisés, on peut citer les radicaux dérivés du glycérol, du pentaérythritolet, du sorbitol,

De préférence, on utilise comme plastifiant, l'acide stéarique qui présente, par ailleurs, l'avantage de solubiliser l'oxyde de plomb $Pb_3O_4$ lorsqu'on utilise ce dernier comme accepteur d'acide et de faciliter la mise en oeuvre de la composition d'élastomere.

Enfin, la composition de l'invention comprend également un premier et un second accepteurs d'acide qui ont pour fonction de capter l'acide chlorhydrique qui se dégage lors de la réaction de vulcanisation, dégagement qui est néfaste car il

conduit à un encrassage des moules.

Des oxydes, des carbonates, des sels d'acide carboxylique ou des phosphates de métaux des groupes II et IV de la classification périodique des éléments peuvent être utilisés dans ce but.

De préférence, selon l'invention, on utilise comme premier accepteur d'acide un sel d'acide carboxylique d'un métal du groupe II ou du groupe IV, tel que le stéarate de zinc, de calcium de plomb, ou de magnésium, et comme second accepteur d'acide un oxyde ou un hydroxyde de calcium, de magnésium, de zinc ou de plomb, de préférence du minium, soit de l'oxyde de plomb $Pb_3O_4$. Généralement, le rapport pondéral entre le premier et le second accepteur d'acide est de 1/15 à 15/1.

Selon un mode préféré de réalisation de l'invention, la composition d' élastomère comprend:

- 100 parties en poids d'un homopolymère d'épichlorhydrine,
- 1 à 10 parties en poids d'acide stéarique,
- 1 à 50 parties en poids d'une charge rentorçante constituée par du noir de carbone de moyenne structure, peu aggloméré, ayant une. dimension moyenne de particules de 200 à 280 micromètres, et, un indice d'absorption d'iode NFT45-11 de 115 à 127 mg/g, un indice d'absorption de dibutyl phtalate NFT45-122 de 108 à 120 $cm^3$/100g et une masse volumique apparente NFT45-151 de 295 à 395 kg/$m^3$,
- 1 à 4 parties en poids de stéarate de zinc. de calcium ou de magnésium,
- 0,5 à 7,5 parties en poids d'oxyde de plomb $Pb_3O_4$
- 0,5 à 5,5 parties en poids au total, d'un premier agent de protection constitué par du dibutyl dithiocarbamate de nickel et d'un second agent de protection choisi parmi la N-isopropyl N'-phenyl p-phénylenediamine (IPPD), la bis (alpha, alpha-diméthyl-ben-zyl)4,4' diphénylamine (DPPD), la triméthyl-2,2,4 dihydro-1,2 quinoléine polymérisée sous forme de 5 FLECTOL H® et le dihydroxy-2, 2' di (méthyl-1 cyclohexyl) -3,3'-dimethyl-5,5' diphénylméthane sous forme de PERMANAX WSP ®, et 0,5 à 3 parties en poids d'un agent de vulcanisation constitué par du carbamate d'hexaméthylène diamine.

Les compositions d' élastomère de l'invention peuvent être mises sous la forme de feuilles ou autres, par les procédés classiques utilisés habituellement dans le domaine des caoutchoucs.

Généralement, on mélange l'homopolymère ou le copolymère d' épichlorhydrine avec l'agent plastifiant, les deux accepteurs d'acide, le ou les agents de protection, puis on ajoute le noir de carbone et l'agent de vulcanisation, et on met le mélange sous la forme voulue, par exemple sous la forme de feuilles avant de le vulcaniser par chauffage à des températures de l'ordre de 160°C.

D'autres caractéristiques et avantages de l'invention apparaîtront mieux à la lecture des exemples suivants donnés bien entendu à titre illustratif et non limitatif.

**Exemple 1**

On malaxe un homopolymère d'épichlorhydrine vendu par la firme Goodrich sous la marque HYDRIN 100 ®, ayant une viscosité intrinsèque de 1,4 dl/g, en utilisant un mélangeur à cylindres dont le cylindre arriere tourne à 30 tours par minute et le cylindre avant à 22 tours par minute, la température des cylindres étant de +50°C.

Après deux minutes de malaxage, on introduit le quart de la dose de plastifiant constitue par de l'acide stéarique, puis simultanément le premier accepteur d'acide constitué par du stéarate de zinc, le second accepteur d'acide constitué par du minium et les deux agents de protection constitués respectivement par la N-isopropyl-N' phényl p-phénylènediamine (IPPD) et le dibutyl dithiocarbamate de nickel (NBC).

On ajoute ensuite par petites fractions le noir de carbone cgnstitué par le produit vendu sous la marque ISAF N 220 ® sous forme de mélange avec le reste de l'acide stéarique, puis l'agent de vulcanisation constitué par le carbamate d'hexaméthylène diamine vendu par la firme Dupont de Nemours sous la marque DIAK No1 ®, puis on effectue trois passages au fin.

On prépare ensuite à partir de la composition élastomère ainsi obtenue des feuilles que l'on soumet à une vulcanisation pendant 40 minutes à 160°C.

On détermine ensuite les propriétés en traction et la dureté shore A en utilisant pour les essais de traction les normes AFNOR NFT 46.002.

On procède également à des essais de vieillissement accélérés effectués à l'air à une température de 140°C pendant 24 h, puis à 140°C dans une huile de synthèse aliphatique de la firme MOBIL referencée 1, pendant 24 h.

Après viellossement dans l'air et après vieillissement dans l'air et dans l'huile, on détermine egalement les propriétes en traction et la dureté Shore 1 dans les mêmes conditions que précédemment pour vérifier les propriétés des feuilles après vieillissement.

Les quantités de produit utilisées et les résultats obtenus sont donnés dans le tableau 1 annexé.

**Exemple 2**

On procède comme dans l'exemple 1, en utilisant les mêmes constituants et les mêmes quantités mais en remplaçant les 2,5 parties de IPPD par 2,5 parties de bis (alpha, alpha-diméthyl-benzyl) 4, 4 -diphénylamine (DPPD).

On soumet également les feuilles obtenues aux essais mécaniques de traction et de dureté dans les mêmes conditions que celles de l'exemple 1. Les résultate obtenus sont donnés dans le tableau 1.

**Exemple 3**

On procède comme dans l'exemple 1 en utilisant les mêmes constituants et les mêmes quantités mais en remplaçant les 2,5 parties de IPPD par 2,5 parties de dihydroxy-2,2' di (méthyl-1 cyclohexyl) -3,3'-dimé-thyl-5,5' diphénylméthane sous forme de (PERMANAX WSP ®.

On détermine les propriétés mécaniques en traction et la dureté Shore dans les mêmes conditions que celles de l'exemple 1.

**Exemple 4**

On opère comme dans l'exemple 1, en utilisant les mêmes constituants et les mêmes quantités, sauf pour l'acide stéarique, le stéarate de zinc et les noirs de carbone. On détermine également les propriétés en traction et la dureté Shore dans les mêmes conditions que celles de l'exemple 1. Les résultats obtenus sont donnés dans le tableau 1.

**Exemple comparatif no 5**

On opère comme dans l'exemple 1, mais sans utiliser d'acide stéarique et d'IPPD. On modifie, par ailleurs, les proportions de minium et de noir de carbone utilisées, et on remplace l'agent de vulcanisation DIAK no1 ® par de l'éthylène thiourée qui est un produit vendu sous la marque NA 22 ® par Dupont de Nemours. On détermine également les proprietés en traction et la dureté. Les résultats obtenus sont donnés dans le tableau 1.

**Exemples comparatifs. no 6 et 7**

On opère comme dans l'exemple 1 mais en remplaçant les noirs de carbone ISAF (N220) ® par du noir FEFN ® 550 qui est un noir à basse structure (particules de 550 micromètres) plus aggloméré que le noir ISAF (N220) ® et moins renforçant, dans l'exemple comparatif n°6, et du noir HAFN 375 ® qui est un noir intermédiaire entre le noir ISAF ® et le noir FEFN ®, dans l'exemple comparatif n°7. Par ailleurs, on modifie certains constituants et on utilise les quantités données dans le tableau 1. On détermine également les propriétés en traction et la dureté Shore dans les mêmes conditions que celles de l'exemple 1. Les résultats obtenus sont donnés dans le tableau 1.

Au vu de ce tableau, on constate en comparant les résultats obtenus dans l'exemple 4 et dans l'exemple comparatif n°7 que la présence de noir ISAF ® permet d'améliorer les propriétés élastiques de 1' élastomère après vieillissement dans l'air et dans l'huile pendant 24 heures à 140°C.

Par ailleurs, en comparant les résultats obtenus dans les exemples 1 et 5, on constate que le choix de l'agent de vulcanisation et le fait d'utiliser simultanement du minium et de l'IPPD permet d'améliorer également les propriétés elastiques de l'élastomère après vieillissement à l'air et vieillissement à l'huile.

Enfin, il y a lieu de noter que les compositions obtenues dans les exemples comparatifs n°5 et 6 sont difficiles à malaxer et ont tendance à coller sur le cylindre arrière du mélangeur.

**Exemples 8 à 12**

On opère dans les mêmes conditions que celles de l'exemple 1 mais en utilisant les constituants et les quantités données dans le tableau 2. On soumet les feuilles obtenues aux mêmes essais de traction et de dureté avant et après vieillissement. Les resultats obtenus sont donnés dans le tableau 2 annexe.

**Exemples comparatifs 13 à 15**

On opère comme dans l'exemple 1, mais en utilisant les quantités et les constituants donnés dans le tableau 2.

On soumet les feuilles obtenues aux essais de traction et de dureté, avant et après vieillissement, comme dans l'exemple 1.

Les résultats obtenus sont donnés dans le tableau 2.

Les résultats du tableau 2 confirment également que:

- le fait d'utiliser un autre noir de carbone que le noir ISAF ® ne permet pas d'obtenir des propriétés élastiques satisfaisantes après vieillissement dans l'air et dans l'huile (voir exemples 13 et 14);
- le fait d'utiliser un second agent de protection constitué par de l'IPPD ou du FLECTOL H ® permet d'obtenir des propriétes élastiques satisfaisantes en utilisant une quantité moindre de minium (rapprocher les résultats de l'exemple 11 des resultats des exemples 8 à 10); et
- que le fait d'utiliser comme agent de vulcanisation une polyamine telle que DIAK n°1 ® permet d'obtenir des résultats ameliores (comparer les resultats obtenus dans les exemples 10 at 12).

**TABLEAU 1**

| | Composition (parties en poids) | Exemples 1 | Exemples 2 | Exemples 3 | Exemples 4 | Exemples comparatifs 5 | Exemples comparatifs 6 | Exemples comparatifs 7 |
|---|---|---|---|---|---|---|---|---|
| | Homopolymère d'Epichlorhydrine (HYDRIN 100)® | 100 | 100 | 100 | 100 | 100 | 100 | 100 |
| Plastifiant | Acide stéarique | 4 | 4 | 4 | 2 | | | 1 |
| 1er accepteur d'acide | Stéarate de zinc | 1 | 1 | 1 | 2 | 1 | 1 | 1 |
| | Retardateur F (anhydride phtalique) | | | | | | 1 | |
| 2eme accepteur d'acide | Minium | 2,5 | 2,5 | 2,5 | 2,5 | 7,5 | | 2,5 |
| Agent de protection | IPPD 1) | 2,5 | | | 2,5 | | 5 | 2,5 |
| | DPPD 2) | | 2,5 | | | | | |
| | PERMANAX WSP® 3) | | | 2,5 | | | | |
| | NBC 4) | 1 | 1 | 1 | 1 | 1 | 1 | 1 |
| Agent de vulcanisation | NA 22® 5) | | | | | 1,5 | 1,5 | |
| | DIAK n°1® 6) | 0,75 | 0,75 | 0,75 | 0,75 | | | 0,75 |
| Charge | Noir FEFN 550® | | | | | | | 50 |
| | Noir HAFN 375® | | | | | | 40 | |
| | Noir ISAF N 220® | 30 | 30 | 30 | 40 | 40 | | |

1) IPPD : N-isopropyl N'-phényl p-phénylène diamine
2) DPPD : bis(alpha, alpha-diméthylbenzyl)4,4' diphénylamine
3) PERMANAX WSP : dihydroxy-2,2' di (méthyl-1 cyclohexyl)-3,3'-diméthyl-5,5' diphénylméthane
4) NBC : dibutyl dithiocarbamate de nickel vendu par E.I. Dupont de Nemours
5) NA 22 : éthylène thiourée
6) DIAK n°1 : carbamate d'hexaméthylène diamine.

**TABLEAU 1** (suite)

| Propriétés mécaniques | | Exemples 1 | Exemples 2 | Exemples 3 | Exemples 4 | Exemples comparatifs 5 | Exemples comparatifs 6 | Exemples comparatifs 7 |
|---|---|---|---|---|---|---|---|---|
| Tel quel | Résistance à la traction (MPa) | 18,7 | 15,3 | 15,7 | 15,3 | 21,7 | 10,1 | 9,5 |
| | Contrainte à 300% d'allongement (MPa) | 6 | 5,3 | 5,7 | 9,4 | 13,4 | 3,2 | 9,2 |
| | Allongement à la rupture (%) | 900 | 905 | 810 | 610 | 530 | 1040 | 397 |
| | Dureté Shore A | 61 | 57 | 59 | 72 | 69 | 54 | 74 |
| Vieillissement 24 h à 140°C | Résistance à la traction | 16,3 | 16,1 | 11,9 | 17,2 | 26,8 | 7,8 | 10,7 |
| | Contrainte à 300% d'allongement (MPa) | 7,6 | 7,1 | 6 | 14,1 | | | 10,7 |
| | Allongement à la rupture (%) | 720 | 770 | 717 | 420 | 285 | 275 | 318 |
| | Dureté Shore A | 64 | 61 | 62 | 80 | 79 | 75 | 75 |
| + Vieillissement huile 24 h à 140°C | Résistance à la traction (MPa) | 14,3 | 11,7 | 9,1 | 13,3 | 13,5 | 5,5 | 1,6 |
| | Contrainte à 300% d'allongement (MPa) | 9 | 6,3 | 5,6 | 12,9 | | | |
| | Allongement à la rupture (%) | 500 | 623 | 571 | 325 | 110 | 60 | 0 |
| | Dureté Shore A | 60 | 52 | 54 | 75 | 82 | 81 | 61 |

**TABLEAU 2**

| Composition (parties en poids) | | Exemples | | | | Exemples comparatifs | | |
|---|---|---|---|---|---|---|---|---|
| | | 8 | 9 | 10 | 11 | 12 | 13 | 14 |
| | Homopolymère d'Epichlorhydrine (HYDRIN 100)® | 100 | 100 | 100 | 100 | 100 | 100 | 100 |
| Plastifiant | Acide stéarique | 2 | 2 | 2 | 2 | 2 | 2 | |
| 1er accepteur d'acide | Stéarate de zinc | 2 | | | | | | 1 |
| | Stéarate de calcium | | 2 | 2 | 2 | 2 | 2 | |
| 2ème accepteur d'acide | Minium | 2,5 | 2,5 | 2,5 | 5 | 2,5 | 2,5 | 5 |
| Agent de protection | PERMANAX ® | | | | | | | |
| | PERMANAX (IPPD) 115 1) | 2,5 | 2,5 | | | | | |
| | FLECTOL H ® 2) | | | 2,5 | | 2,5 | 2,5 | |
| | NBC 3) | 1 | 1 | 1 | 1 | 1 | 1 | 1 |
| Noir de carbone | Noir ISAF ® | 30 | 30 | 30 | 30 | 30 | | |
| | Noir FEF ® | | | | | | 30 | 30 |
| Agent de vulcanisation | NA 22 F ® 4) | | | | | 1,5 | 1,5 | 1,5 |
| | DIAK n°1 ® 5) | 0,75 | 0,75 | 0,75 | 0,75 | | | |

1) IPPD : N-isopropyl N'-phényl p-phénylène diamine
2) FLECTOL H : triméthyl-2,2,6 dihydro 1,2 quinoléine polymérisée
3) NBC : dibutyl dithiocarbamate de nickel vendu par E.I. Dupont de Nemours
4) NA 22 F : éthylène thiourée encapsulée
5) DIAK n°1 : carbamate d'hexaméthylène diamine

**TABLEAU 2** (suite)

| Propriétés mécaniques | | Exemples 8 | Exemples 9 | Exemples 10 | Exemples 11 | Exemples comparatifs 12 | Exemples comparatifs 13 | Exemples comparatifs 14 |
|---|---|---|---|---|---|---|---|---|
| Tel quel | Résistance à la traction (MPa) | 17,7 | 18,9 | 17,8 | 18 | 19,8 | 13,2 | 12,7 |
| | Contrainte à 300% d'allongement (MPa) | 6,9 | 8,7 | 7,3 | 8,4 | 7,7 | 7 | 9,1 |
| | Allongement à la rupture (%) | 811 | 711 | 787 | 714 | 796 | 728 | 505 |
| | Dureté Shore A | 59 | 62 | 61 | 63 | 62 | 59 | 61 |
| Vieillissement Air 24 h + 140°C | Résistance à la traction (MPa) | 16,1 | 16,3 | 14,6 | 18,3 | 17,4 | 12,5 | 14,8 |
| | Contrainte à 300% d'allongement (MPa) | 8,4 | 10 | 9,2 | 11,5 | 15,7 | 6,1 | 13,4 |
| | Allongement à la rupture (%) | 652 | 579 | 520 | 520 | 339 | 324 | 357 |
| | Dureté Shore A | 60 | 59 | 62 | 65 | 65 | 55 | 50 |
| Vieillissement Air 24 h + 140°C + Huile 24h + 140°C | Résistance à la traction (MPa) | 12,3 | 8,3 | 11,8 | 11,9 | 9,7 | 12,1 | 13,2 |
| | Contrainte à 300% d'allongement (MPa) | 8,8 | 6,6 | 9,8 | 8,8 | 7,1 | | |
| | Allongement à la rupture (%) | 465 | 420 | 460 | 405 | 455 | 296 | 291 |
| | Dureté Shore A | 60 | 55 | 50 | 55 | 60 | 65 | 50 |

**Revendications**

1. Composition d' élastomère, caractérisée en ce qu'elle comprend:

- 100 Parties en poids d'homopolymère ou de copolymere d'épichlorhydrine,
- 0,5 à 20 parties en poids d'un agent plastifiant,
- 1 à 150 parties en poids d'une charge renforçante constituée par un noir de carbone de moyenne structure, peu agglomere, ayant une dimension moyenne de particules de -200 à 280 micromètres, un indice d'absorption d'iode de 115 à 127 mg/g, un indice d'absorption de dibutyl phtalate de 108 à 120 $cm^3$/100g et une masse volumique apparente de 295 à 395 kg/$m^3$,
- 0,5 à 7,5 parties en poids d'un premier accepteur d'acide constitue par un sel métallique d'un acide carboxylique comportant au moins 8 atomes de carbone,
- 0,5 à 7,5 parties en poids d'un second accepteur d'acide constitué par un oxyde, un hydroxyde ou un sel métallique,
- 0,5 à 5,5 parties en poids d'au moins un agent de protection choisi dans le groupe des composés organiques à cycles aromatiques conjugués, contenant des fonctions amines ou phénol et des sels métalliques de dithiocarbamate d'alkyle ou d'aryle, et
- 0,5 à 5,5 parties en poids d'un agent de vulcanisation.

2. Composition selon la revendication 1, caractérisée en ce qu'elle comprend:

- 100 parties en poids d'homopolymère ou de copolymère d'épichlorhydrine,
- 1 à 10 parties en poids d'un agent plastifiant,
- 1 à 50 parties en poids dudit noir de carbone,
- 1 à 4 parties en poids dudit premier accepteur d'acide,
- 0,5 à 7,5 parties en poids dudit secon accepteur d'acide,
- 0,5 à 5,5 parties en poids du ou desdits agents de protection, et
- 0,5 à 3 parties en poids d'un agent de vulcanisation.

3. Composition selon l'une quelconque des revendications 1 et 2, caractérisée en ce que l'agent de vulcanisation est constitué par une polyamine aliphatique, alicyclique ou aromatique ou par un carbamate de diamine.

4. Composition selon la revendication 3, caractérisée en ce que l'agent de vulcanisation est le carbamate d'hexaméthylène diamine.

5. Composition selon l'une quelconque des revendications 1 à 4, caractérisée en ce qu'elle comprend deux agents de protection constitués, d'une part, par un composé organique à cycles aromatiques conjugués contenant des fonctions amine ou phenol et d'autre part, par un sel métallique de dithiocarbamate d'alkyle ou d'aryle.

6. Composition selon l'une quelconque des revendications 1 à 5, caractérisée en ce que l'agent plastifiant répond à la formule:

$$R^1 - (CH_2)_n - COOR^2$$

dans laquelle $R^1$ est un groupe alkyle, $R^2$ est un groupe alkyle hydroxyle dérivé d'un polyalcool

aliphatique ou un atome d'hydrogène, et n est un nombre entier supérieur à 7.

7. Composition selon l'une quelconque des revendications 1 à 5, caractérisée en ce que l'agent plastifiant répond à la formule:

$R^2OOC-(CH_2)_n-COOR^2$

dans laquelle $R^2$ est un groupe alkyle hydroxylé dérivé d'un polyalcool aliphatique ou un atome d'hydrogène, et n est un nombre entier supérieur à 7.

8. Composition selon la revendication 6, caractérisée en ce que l'agent plastifiant est l'acide stearique.

9. Composition selon l'une quelconque des revendications 1 à 8, caractérisée en ce que le premier accepteur d'acide est le stearate de zinc, de calcium, de plomb ou de magnesium.

10. Composition selon l'une quelconque des revendications 1 à 9, caractérisée en ce que le second accepteur d'acide est un oxyde ou un hydroxyde de calcium, de magnésium, de zinc ou de plomb.

11. Composition selon la revendication 10, caractérisée en ce que le second accepteur d'acide est l'oxyde de plomb $Pb_3O_4$.

12. Composition selon l'une quelconque des revendicatiohs 1 à 11, caractérisée en ce que l'agent de protection est un sel métallique d'un dithiocarbamate d'alkyle ou d'aryle de formule:

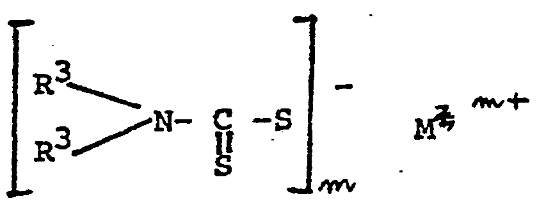

dans laquelle $R^3$ est un radical alkyle ou aryle, et M est un métal choisi dans le groupe comprenant le sodium, le potassium, le bismuth, le cadmium, le cuivre, le nickel, le plomb, le selénium, le tellure et le zinc, et m est la valence du métal.

13. Composition selon la revendication 12, caractérisée en ce que l'agent de protection est le dibutyl dithiocarbamate de nickel.

14. Composition selon l'une quelconque des revendications 1 à 13, caractérisée en ce que l'agent de protection est choisi parmi la N-isopropyl N'-phényl p-phenylenediamine (IPPD), la bis (alpha, alpha-dimethyl benzyl) 4,4'-diphénylamine (DPPD), le dihydroxy-2,2' di (méthyl-1 cyclohexyl)-3,3',diméthyl-5,5' diphénylméthane sous formé de PERMANAX WSP ® et la triméthyl 2,2,6 di-hydro-1,2 quinoléine polymerisée sous forme de FLECTOL H ®.

15. Composition d'elastomère selon la revendication 1, caractérisée en ce qu'elle comprend:

- 100 parties en poids d'un homopolymère d' épichlorhydrine,
- 1 à 10 parties en poids d'acide stéarique,
- 1 à 50 parties en poids d'une charge renforçante constituée par du noir de carbone de moyenne structure, peu aggloméré, ayant une dimension moyenne de particules de 200 à 280 - micromètres, un indice d'absorption d'iode de 115 à 127 mg/g, un indice d'absorption de dibutyl phtalate de 108 à 120 cm³/lOOg et une masse volumique apparente de 295 à 395 kg/m³,
- 1 à 4 parties en poids de stéarate de zinc, de calcium ou de magnésium,
- 0,5 à 7,5 parties en poids d'oxyde de plomb $Pb_3O_4$,
- 0,5 à 5,5 parties en poids au total d'un premier agent de protection constitue par du dibutyl dithiocarbamate de nickel et d'un second agent de protection choisi parmi la N-isopropyl N'-phényl p-phényle, nediamine (IPPD), bis (alpha, alpha-diméthyl-benzyl) 4,4' diphénylamine (DPPD) de la triméthyl-2'2,4 dihydro-1,2 quinoléine polymerisée sous forme de FLECTOL ® et du dihydroxy-2,2' di (méthyl-1 cyclohexyl -3,3'-dimé-thyl-5,5' diphénylméthane sous forme de PEMANAX WSP ®, et
- 0,5 à 3 parties en poids d'un agent de vulcanisation constitué par du carbamate d'hexaméthylène diamine.

## Patentansprüche

1. Elastomerzusammensetzung, dadurch gekennzeichnet, daß sie umfaßt:

- 100 Gew.-Teile Epichlorhydrinhomopolymer oder -copolymer,
- 0,5 bis 20 Gew.-Teile Weichmacher,
- 1 bis 150 Gew.-Teile verstärkender Füllstoff, bestehend aus wenig agglomeriertem Ruß mit mittlerer Struktur, mit einer mittleren Teilchengröße von 200 bis 280 µm, einem Jodabsorptionsindex von 150 bis 127 mg/g, einem Dibutylphthalatabsorptionsindex von 108 bis 120 cm³/100 g und einer Schüttdichte von 295 bis 395 kg/m³,
- 0,5 bis 7,5 Gew.-Teile eines ersten Säureakzepters, bestehend aus einem Metallsalz einer Carbonsäure mit mindestens 8 Kohlenstoffatomen,
- 0,5 bis 7,5 Gew.-Teile eines zweiten Säureakzeptors, bestehend aus einem Oxid, Hydroxid oder Salz eines Metalls,
- 0,5 bis 5,5 Gew.-Teile mindestens eines Schutzmittels, ausgewählt aus der Gruppe der organischen Verbindungen mit konjugierten aromatischen Ringen, die Amin- oder Phenolfunktionen enthalten, und der Metallsalze von Alkyl oder Aryldithiocarbamat, und
- 0,5 bis 5,5 Gew.-Teile Vulkanisationsmittel.

2. Zusammensetzung nach Anspruch 1, dadurch gekennzeichnet, daß sie umfaßt:

- 100 Gew.-Teile Epichlorhydrinhomopolymer oder -copolymer,
- 1 bis 10 Gew.-Teile Weichmacher,
- 1 bis 50 Gew.-Teile Ruß,
- 1 bis 4 Gew.-Teile des ersten Säureakzeptros,
- 0,5 bis 7,5 Gew.-Teile des zweiten Säureakzeptors,
- 0,5 bis 5,5 Gew.-Teile Schutzmittel und

- 0,5 bis 3 Gew.-Teile Vulkanisationsmittel.

3. Zusammensetzung nach einem der Ansprüche 1 und 2, dadurch gekennzeichnet, daß das Vulkanisationsmittel besteht aus einem aliphatischen, alicyclischen oder aromatischen Polyamin oder einem Diamincarbamat.

4. Zusammensetzung nach Anspruch 3, dadurch gekennzeichnet, daß das Vulkanisationsmittel Hexamethylendiamincarbamat ist.

5. Zusammensetzung nach einem der Ansprüche 1 bis 4, dadurch gekennzeichnet, daß sie zwei Schutzmittel um-faßt, die bestehen einerseits aus einer organischen Verbindung mit konjugierten aromatischen Ringen, die Amin- oder Phenolfunktionen enthalten, und andererseits aus einem Metallsalz von Aryl- oder Alkyltdithiocarbamat.

6. Zusammensetzung nach einem der Ansprüche 1 bis 5, dadurch gekennzeichnet, daß der Weichmacher der Formel entspricht:

$R^1-(CH_2)_n-COOR^2$

worin $R^1$ eine Alkylgruppe, $R^2$ eine von einem aliphatischen Polyalkohol abgeleitete hydroxylierte Alkylgruppe oder ein Wasserstoffatom und n eine ganze Zahl von mehr als 7 bedeuten.

7. Zusammensetzung nach einem der Ansprüche 1 bis 5, dadurch gekennzeichnet, daß der Weichmacher der Formel entspricht:

$R^2OOC-(CH_2)_n-COOR^2$

worin $R^2$ eine von einem aliphatischen Polyalkohol abgeleitete hydroxylierte Alkylgruppe oder ein Wasserstof fatom und n eine ganze Zahl von mehr als 7 bedeuten.

8. Zusammensetzung nach Anspruch 6, dadurch gekennzeichnet, daß der Weichmacher Stearinsäure ist.

9. Zusammensetzung nach einem der Ansprüche 1 bis 8, dadurch gekennzeichnet, daß der erste Säureakzeptor Zink-, Calcium-, Blei- oder Magnesiumstearat ist.

10. Zusammensetzung nach einem der Ansprüche 1 bis 9, dadurch gekennzeichnet, daß der zweite Säureakzeptor ein Calcium-, Magnesium-, Zink- oder Bleioxid oder -hydroxid ist.

11. Zusammensetzung nach Anspruch 10, dadurch gekennzeichnet, daß der zweite Säureakzeptor das Bleioxid $Pb_30_4$ ist.

12. Zusammensetzung nach einem der Ansprüche 1 bis 11, dadurch gekennzeichnet, daß das Schutzmittel ein Metallsalz eines Aryl- oder Alkyldithiocarbamats der Formel ist

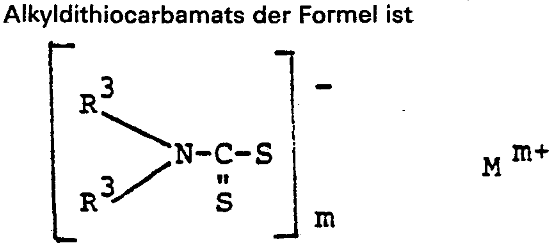

worin $R^3$ einen Alkyl- oder Arylrest und M ein Metall, ausgewählt aus der Gruppe, die umfaßt Natrium, Kalium, Wismut, Cadmium, Kupfer, Nickel, Blei, Selen, Tellur und Zink, und m die Valenz des Metalls bedeuten.

13. Zusammensetzung nach Anspruch 12, dadurch gekennzeichnet, daß das Schutzmittel Nickeldibutyldithiocarbamat ist.

14. Zusammensetzung nach einem der Ansprüche 1 bis 13, dadurch gekennzeichnet, daß das Schutzmittel ausgewählt wird aus der Gruppe N-Isopropyl-N'-phenyl-pphenylendiamin (IPPD), Bis (α,α-dimethylbenzyl) -4,4'-diphenylamin (DPPD), 2,2'-Dihydroxy-di-3,3'-(1-methyl-cyclohexyl) -5, 5'-dimethyl-diphenylmethan in Form von PERMANAX WSP® und polymerisiertes 2,2,6-Trimethyl-1,2-dihydro-chinolin in Form von FLECTOL H®.

15. Elastomerzusammensetzung nach Anspruch 1, dadurch gekennzeichnet, daß sie umfaßt:

- 100 Gew.-Teile Epichlorhydrinhomopolymer,
- 1 bis 10 Gew.-Teile Stearinsäure,
- 1 bis 50 Gew.-Teile eines verstärkenden Füllstoffs, bestehend aus wenig agglomeriertem Ruß mit mittlerer Struktur und mit einer mittleren Teilchengröße von 200 bis 280 µm, einem Jodabsorptionsindex von 1 1 5 bis 127 mg/g, einem Dibutylphthalatabsorptionsindex von 108 bis 120 $cm^3/100$ g und einer Schüttdichte von 295 bis 395 $kg/m^3$,
- 1 bis 4 Gew.-Teile Zink-, Calcium- oder Magnesiumstearat,
- 0,5 bis 7,5 Gew.-Teile Bleioxid $Pb_30_4$,
- insgesamt 0,5 bis 5,5 Gew.-Teile eines ersten Schutzmittels, bestehend aus Nickeldibutyldithiocarbamat und eines zweiten Schutzmittels, ausgewählt aus der Gruppe N-Isopropyl-N'-phenyl-p-phenylendiamin (IPPD), Bis- (α,α-dimethylbenzyl) -4,4'-diphenylamin (DPPD), polymerisiertes 2,2,4-Trimethyl-1,2-dihydro-chinolin in Form von FLECTOL H® und 2,2'-Dihydroxy-di-3,3'-(1 -methyl-cyclohexyl) -5, 5'-dimethyl-diphenylmethan in Form von PERMANAX WSP® und
- 0,5 bis 3 Gew.-Teile eines Vulkanisationsmittels, bestehend aus Hexamethylendiamincarbamat.

## Claims:

1. Elastomer composition, characterized in that it comprises:

- 100 parts by weight of a homopolymer or copolymer of epichlorohydrin,
- 0.5 to 20 parts by weight of a plasticiser,
- 1 to 150 parts by weight of a reinforcing filler constituted by carbon black with little agglomeration, having an average particle size from 200 to 280 micro-meters, an iodine absorption index of 115 to 127 mg/g, a dibutyl phthalate absorption index of 108 to 120 $cm^3/100g$, and an apparent density of 295 to 395 $kg/m^3$,
- 0.5 to 7.-5 parts by weight of a first acid-acceptor comprising a metal salt of a carboxylic acid having at least 8 carbon atoms,

- 0.5 to 7.5 parts by weight of a second acid acceptor comprising a metal oxide, hydroxide or salt,
- 0.5 to 5.5 parts by weight of at least one protection agent selected from the group comprising organic compounds with conjugated aromatic rings, containing amine or phenol groups, and metal alkyl or aryl dithiocarbonate salts, and
- 0.5 to 5 parts by weight of a vulcanising agent.

2. Composition according to Claim 1, characterized in that it comprises:
- 100 parts by weight of the homopolymer or copolymer of epichlorohydrin,
- 1 to 10 parts by weight of a plasticiser,
- 1 to 50 parts by weight of the said carbon black,
- 1 to 4 parts by weight of said first acid-acceptor,
- 0.5 to 7.5 parts by weight of said second acid-acceptor,
- 0.5 to 5.5 parts by weight of said protection agent or agents, and
- 0.5 to 3 parts by weight of a vulcanising agent.

3. Composition according to either of Claims 1 and 2; characterized in that the vulcanising agent is an aliphatic, alicyclic or aromatic polyamine, or a diamine carbamate.

4. Composition according to Claim 3, characterized in that the vulcanising agent is hexamethylene diamine carbamate.

5. Composition according to any one of Claims 1 to 4, characterized in that it comprises two protection agents, constituted on the one hand by an organic compound with conjugated aromatic rings containing amine or phenol groups, and on the other hand, by a metal alkyl or aryl dithiocarbamate salt.

6. Composition according to any one of Claims 1 to 5, characterized in that the plasticiser has the formula:

$R^1-(CH_2)_n-COOR^2$

in which $R^1$ is an alkyl group, $R^2$ is a hydroxyalkyl group derived from an aliphatic polyol or a hydrogen atom, and n is an integer greater than 7.

7. Composition according to any one of Claims 1 to 5, characterized in that the plasticiser has the formula:

$R^2OOC-(CH_2)_n-COOR^2$

in which $R^2$ is a hydroxyalkyl group derived from an aliphatic polyol, or a hydrogen atom, and n is an integer greater than 7.

8. Composition according to Claim 6, characterized in that the plasticiser is stearic acid.

9. Composition according to any one of Claims 1 to 8, characterized in that the first acid acceptor is zinc calcium, lead or magnesium stearate.

10. Composition according to any one of Claims 1 to 9, characterized in that the second acid acceptor is an oxide or hydroxide of calcium, magnesium, zinc or lead.

11. Composition according to Claim 10, characterized in that the second acid acceptor is lead oxide $Pb_3O_4$.

12. Composition according to any one of Claims 1 to 11, characterized in that the protection agent is a metal alkyl or aryl dithiocarbamate salt having the formula:

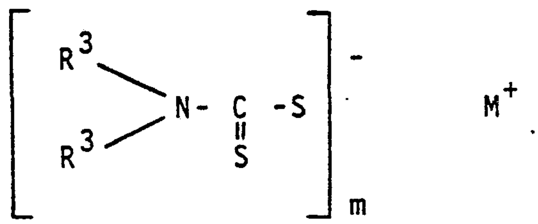

wherein $R^3$ is an alkyl or aryl radical and M is a metal selected from the group comprising sodium, potassium, bismuth, cadmium, copper, nickel; lead, selenium, tellurium and zinc, and m is the valence of the metal.

13. Composition according to Claim 12, characterized in that the protection agent is nickel dibutyl dithiocarbamate.

14. Composition according to any one of Claims 1 to 13, characterized in that the protection agent is selected from N-isopropyl-N'-phenyl-p-phenylene diamine (IPPD), 4,4'-bis(alpha, alpha-dimethyl benzyl)-diphenylamine (DPPD) 2,2'-dihydroxy-3,3'-di(1-methylcyclohexyl)-5,5'-dimethyl-diphenyl methane in the form of PERMANAX WSP ®, and polymerised 2,2,6-trimethyl-1,2-dihydroquinoline in the form of FLECTOL H ®.

15. Elastomer composition according to Claim 1, characterized in that it comprises:
- 100 parts by weight of epichlorohydrin homopolymer,
- 1 to 10 parts by weight of stearic acid,
- 1 to 50 parts by weight of a reinforcing filler comprising carbon black of average structure with little agglomeration, having an average particle size of 200 to 218 micro-meters, an iodine absorption index of 115 to 127 mg/g, a dibutyl phthalate absorption index of 108 to 120 $cm^3$/IOOg and an apparent density of 295 to 395 $kg/m^3$,
- 1 to 4 parts by weight of zinc, calcium or magnesium stearate,
- 0.5 to 7.5 parts by weight of lead oxide $Pb_3O_4$,
- 0.5 to 5.5 parts by weight in total of a first protection agent comprising nickel dibutyl dithiocarbamate and a second protection agent selected from N-isopropyl-N'-phenyl-p-phenylene diamine (IPPD), 4,4'-bis(alpha, alpha-dimethyl benzyl)-diphenylamine (DPPD), polymerised 2,2,6-trimethyl-1,2-dihydroquinoline in the form of FLECTOL H ® and 2,2'-dihydroxy-3,3'-di(1-methylcyclohexyl)-5,5'-dimethyl-diphenyl methane in the form of PERMANAX WSP ®, and
- 0.5 to 3 parts by weight of a vulcanising agent comprising hexamethylene diamine carbamate.